# EUROPEAN PATENT SPECIFICATION

(11) **EP 3 172 497 B1**
(45) Date of publication and mention of the grant of the patent: **18.08.2021**
(21) Application number: 14749717.6
(22) Date of filing: 24.07.2014
(51) Int. Cl.: F24H 9/00, F24D 3/08, F24D 3/10, F24D 19/10, F24D 11/02

(54) **WATER HEATER AND APPLICATIONS THEREOF**
CHAUFFE-EAU ET APPLICATION
CHAUFFE-EAU ET APPLICATIONS CORRESPONDANTES

(43) Date of publication of application: 31.05.2017
(73) Proprietor: Cicero Hellas S.A., 117 43 Athens (GR)
(72) Inventor: NOMIKOS, Elias, P. Faliro 175 64 Athens (GR)
(74) Representative: Pinatsis, Nikolaos
(86) International application number: PCT/EP2014/002021
(87) International publication number: WO 2016/012029

(56) References cited:
- EP-A1- 1 026 448
- EP-A1- 1 965 164
- AT-B- 368 271
- FR-A1- 2 897 149
- None

## Description

### TECHNICAL FIELD OF THE INVENTION

The present invention relates to improved water heater system and more particularly to a high-efficiency water heater comprising a storage water heater combined with a heat exchanger and applications thereof for heating systems and hot water production in domestic, commercial or industrial buildings.

### BACKGROUND OF THE INVENTION

There are two types of conventional water heaters, namely the storage water heaters and the instantaneous (continuous flow) water heaters. Conventional storage water heaters heat the water stored in an insulated tank and the stored hot water is drawn upon as required. When the hot water is used, it is replaced with cold water, which is re-heated and again stored in the tank.

Said conventional storage water heaters can only store a predefined volume of water and cannot always supply hot water on demand. If the stored water runs out, the user has to wait until the heater re-heats the cold water to the desired temperature.

Moreover, the storage tanks of water heaters have a large tank surface area, which continually loses energy in standby mode despite the insulation around the tank.

On the other hand, instantaneous and continuous flow water heaters are characterized by a relatively high thermal efficiency, however they also suffer from several deficiencies in performance which result in waste of energy and water.

Conventional instantaneous water heaters comprise a very complicated thermal and flow control mechanism, which, however, cannot guarantee continuously delivery of hot water. Instantaneous water heaters become cold in standby mode and have no hot water storage capacity. Thus, when the water starts flowing through it, there is a significant delay until the cold water of the heat exchanger heats up.

Consequently, the first several liters of water, which leave the system are cold and the water (which is still flowing) slowly heats to the user's desired temperature. This results not only to waste of water, but also of the energy used in the heating up process.

In addition, when the water supply contains impurities such as mud, lime or salt, these impurities can deposit themselves inside the water heater components and / or tanks, which come into direct contact with the impurities. In instantaneous water heaters, the impurities can accumulate on the walls of the pipe and over time the build-up of sediment causes the heat exchange performance to be detrimentally effected, the efficiency of the unit continually drops as the build-up of sediment increases and hygiene problem arises due to growth of bacteria.

Various systems are already known for space heating and simultaneously supplying domestic hot water, which employ a storage water heater combined with a heat exchanger.

US 4 823 770 discloses a compact hot water heater for space heating requirements, while simultaneously supplying domestic hot water in a single unit. Said system comprises a closed vertical cylinder filled with a heat transfer medium such as water, with a generally centrally disposed gas/liquid heat exchanger system therein for heat transfer to the water. Domestic hot water is provided by a water-to-water heat exchanger coil in the tank and a tempering valve may be included at the outlet to admix cold water, if required, to provide domestic hot water at a usable temperature.

EP-A-1965164 discloses a device for heat exchange between fluids belonging to two circuits, wherein the device has a reservoir to receive coolant e.g. water and a coolant inlet equipped at a lower part of the reservoir. A coolant outlet is equipped at an upper part of the reservoir. A coaxial heat pipe is arranged at inside of the reservoir and is immersed in the coolant. An inner tube of the pipe is connected to the inlet at an end of the reservoir and opens at another end of the reservoir. The inner tube is provided as a passage for the coolant. An outer tube of the pipe is provided as a passage for the refrigerant, wherein the refrigerant exchanges heat with the water of the inner tube of the pipe of the heat exchanger and the water then flows through the upper end emerging from the inner tube and feeds the reservoir, and the water contained in the reservoir then exchanges heat with the refrigerant again via the wall of the outer tube of the pipe.

EP-A-1026448 discloses a gas heated water heater comprising a circulation pump with a gas burner and a reheating duct connected to the pump. The primary of the direct heat exchanger is fed with hot water from the recirculation duct. The auxiliary heat exchanger has a reduced capacity envelope and a counter-current direct heat exchanger.

Although each of the known systems represents an attempt to overcome the problems associated with the water heater systems, there still exists a need for an improved highly efficient system that can be easily installed and less complex in construction with eliminated hygiene problems.

### SUMMARY OF THE INVENTION

It is, therefore, an object of the present invention to provide an improved high-efficiency water heater system for heating applications and hot water domestic supply, which overcomes the deficiencies of the prior art, avoids hygiene problems and high manufacturing costs.

It is another object of the present invention to provide a high-efficiency water heater system, which is less complex and can be easily installed.

In accordance with the above objects of the present invention, the invention is disclosed by claim 1. According to said claim, a water heater system for heating applications and domestic hot water supply is provided comprising a storage container filled with a heat transfer fluid such as water, wherein said storage container comprises in its top portion a first inlet port for mains water supply and a first outlet port for domestic hot water supply, the system further comprising a pipe-in-pipe heat exchanger disposed in the storage container for transferring heat energy to the heat transfer fluid, said pipe-in-pipe heat exchanger comprising an inner pipe defining a flow circuit and an outer pipe, the system further comprising a counterflow circuit provided with a circulator to generate a counterflow in the heat exchanger, said counter circuit being also provided with a three-way valve for adjusting the desired temperature for hot water domestic supply, wherein the three-way valve of the counterflow circuit is for regulating the flow of hot water in the counterflow circuit in order to achieve the desired hot water temperature at the first outlet port, wherein the circulator is for drawing the hot heat transfer fluid contained in the storage container in the counterflow circuit and returning said hot heat transfer fluid to the outer pipe of the heat exchanger at its upper part, and wherein the inner pipe of the heat exchanger is connected to the first inlet port from which cold water mains supply can be delivered to the inner pipe of the heat exchanger, wherein the inner pipe is first in the storage container for heating the cold water of the inner pipe by convective heat transfer from the heat transfer fluid contained in the storage container, whereby said inner pipe then enters said outer pipe of the heat exchanger and ends to the first outlet port for domestic hot water supply, wherein the first outlet port is for delivering hot water from the inner pipe at the desired temperature, wherein the outer pipe of the heat exchanger is for circulating, in counterflow to the inner pipe, hot water that has been drawn from the storage container so that the water of the inner pipe of the heat exchanger can be further heated by heat transfer from the heat transfer fluid of the outer pipe of the heat exchanger, and further said system comprises a control unit for controlling the flow of the heat transfer fluid throughout the system and for controlling the operation of the water heater system, wherein the control unit is configured to control the three-way valve and/or the circulator to regulate the supply of hot water in the counterflow circuit in order to obtain said desired temperature for consumption at the first outlet port, wherein the three-way valve is configured to lead the heat transfer fluid from the storage container to the circulator or to lead the heat transfer fluid from the circulator back to the circulator.

Further, the above objects of the present invention are achieved by a clear separation of the circuit to provide hot water from the stored hot water contained in the storage container.

Further preferred embodiments of the present invention are defined in dependent claims 2 to 10.

Other objects and advantages of the present invention will become apparent to those skilled in the art in view of the following detailed description in conjunction with the accompanying drawings, wherein like reference numbers refer to similar parts throughout the drawings, and wherein:

### BRIEF DESCRIPTION OF THE DRAWINGS

Fig. 1 shows a schematic view of the water heater system combined with a heat exchanger according to the present invention.
Fig. 2 shows a schematic view of the water heater system combined with a heat pump circuit, a central heating system circuit and a solar collector circuit according to the present invention.
Fig. 3 shows a schematic view of the water heater system combined with a boiler circuit and a solar collector circuit according to the present invention.
Fig. 4 shows a schematic view of the water heater system combined with a boiler circuit according to the present invention
Fig. 5 shows a schematic view of the water heater system combined with a solar collector circuit according to the present invention
Fig. 6 shows a schematic view of the water heater system combined with a heat pump circuit and a solar collector circuit according to the present invention
Fig. 7 shows a schematic view of the water heater system combined with a heat pump circuit according to the present invention
Fig. 8 shows a schematic view of an alternative system according to the present invention comprising a water heater system combined with heat pump circuit and a boiler circuit.

### DETAILED DESCRIPTION OF THE INVENTION

The water heater system according to the present invention comprises a storage container (3) filled with a heat transfer fluid, a heat exchanger (7), a variable speed circulator (4), a three-way proportional solenoid valve (8) and a control unit (15).

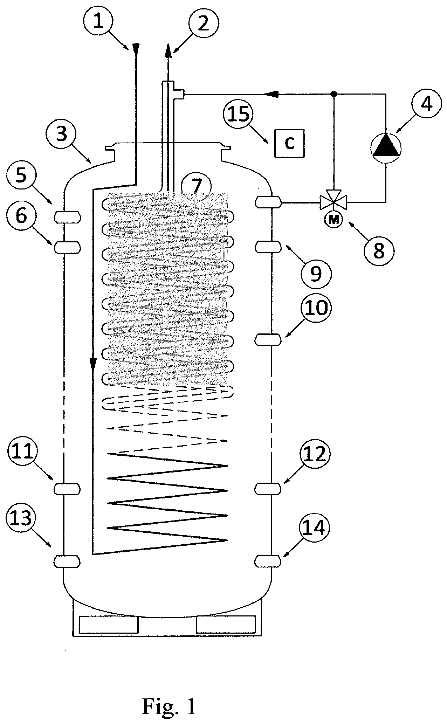

Figure 1 shows the water heater system of the present invention comprising a container (3) combined with a heat exchanger (7), said container is an insulated container (3) that functions as a storage unit of the heat transfer fluid and the heat exchanger (7) is disposed in said container. The storage container (3) is made from steel (enamelled or not), stainless steel or plastic with increased resistant to high temperatures and pressures.

The storage container (3) is generally cylindrical in construction but it can have any shape and is overall closed and filled with the heat transfer fluid, wherein said heat transfer fluid can be any fluid used in conventional heating systems. In a most preferred embodiment, the heat transfer fluid is water.

The pressure within the storage container (3) is atmospheric. The storage container is provided with a warning or overflow pipe (not shown).

The storage container (3) includes a first inlet port (1) in the top portion of the storage container (3) for mains water supply. The storage container (3) also includes a first outlet port for domestic hot water supply (2) in the top portion of said storage container. The first outlet port (2) is connected to an outlet device such as hot water tap (not shown).

Further, said storage container (3) is provided with several axial holes for the position of temperature sensors and for flow communication of the water contained in the storage container with additional heat source circuits such as a conventional boiler circuit (17), a heat pump circuit (16) or a solar collector circuit (18) in order to increase the thermal energy within the storage container.

The main use of the storage container is to provide hot water for domestic use and for space heating requirements. For heating requirements, hot water is drawn from the top of the storage container (3), where the water is am hottest, via a second hot water outlet port (6) to the heating system (conventional radiators, FCU, floor heating etc.) of the building (not shown), while the cooler water from the heating system (conventional radiators, FCU, floor heating etc.) is returned to the storage container (3) via a second inlet port (11).

The storage container (3) is designed for cylinder cupboard, floor standing and wall mounted applications and may be mounted vertically or horizontally.

The geometric dimensions of the storage container (3) vary depending on the desired total capacity, the available heat sources, the hot water demand for domestic supply and for space heating requirements.

Inside the storage container (3) and immersed in the heat transfer fluid (water) there is a separate water circuit for domestic supply comprising a heat exchanger (7) for transferring heat energy to the water for domestic supply. Said heat exchanger (7) is of coiled configuration and comprises two co-axial pipes, an outer pipe and an inner pipe, wherein the outer pipe houses co-axially the inner pipe (pipe-in-pipe) and the water flowing through the inner pipe is independent of the water flowing between the exterior of the inner pipe and the interior of the outer pipe. In fact, the heat exchanger forms part of the separate water circuit for domestic supply.

The separate water circuit for domestic hot water supply is connected to the cold water mains supply via the first inlet port (1) from which cold water is delivered to the inner pipe of the heat exchanger (7) and ends to the domestic hot water supply via the first outlet port (2) on the top portion of the storage container (3), wherein also the inner pipe of the heat exchanger ends.

It has been surprisingly found that the heat exchanger with pipe-in-pipe structure used in the water heater system according to the present invention works advantageously according to the counterflow principle and this has been proven as thermally the most favorable variant.

Thus, according to one embodiment of the present invention, the outer pipe of the heat exchanger circulates in counterflow heat transfer fluid that has been drawn from the storage container (3) and returned to the outer pipe at its upper part by using a variable speed circulator (4).

The geometric characteristics of the heat exchanger (7) vary depending on the total capacity of the storage container and the required heat input. Therefore, the total length and the cross sections of the inner and outer pipes vary depending on the desired flow consumption of hot water, the desired temperature, the pressure of the system used for space heating and in general from the application, wherein the system of the present invention is applied.

The coiled configuration of the heat exchanger is preferably in sinuous form, as said configuration enables the construction of relatively long heat exchangers with relatively small volume.

The inner and outer pipes of the heat exchanger (7) may be of any type such as plastic or metallic pipes, preferably stainless steel with wavy corrugated hose due to high-efficiency heat transfer. In addition, it is preferred the use of stainless-steel pipes for the inner pipe and the separate water circuit for domestic supply in order to avoid corrosion.

The inner pipe of the heal exchanger (7) is forming part of the separate water circuit for domestic supply and extends along the whole length of the outer pipe of the heat exchanger.

The outer pipe of the heat exchanger extends from the top portion to bottom of the storage container and is open at its lower part.

Further, said outer pipe at its upper part is equipped with a fitting device (not shown) in order to facilitate the provision of heat transfer fluid (hot water) in counterflow from the variable speed circulator (4).

The heat exchanger (7) is mounted inside the storage container (3) in order to avoid vibration during operation of the system by using a stainless-steel frame or any other suitable support construction.

Further, the water heater system according to the present invention comprises a control unit (15). Said control unit (15) is responsible for adjusting and stabilizing the desired temperature of the domestic hot water supply at the first outlet port (2). This is achieved by planning and controlling the operation of all electromechanical devices of the counterflow circuit such as the three-way valve (8), and/or the variable speed circulator (4), separately and simultaneously.

For the operation of said control unit, a special developed algorithm is used that takes into account the outlet temperature, the required demand and the desired hot water temperature, allowing the appropriate operation of the individual electromechanical devices, namely variable speed circulator, proportional solenoids, electrovalves, etc..

More specifically, the hot water at the first outlet port (2) drawn for consumption should be at the desired temperature and this is achieved through the appropriate operation of the three-way proportional valve (8)and/or variable speed circulator (4) that is included in the counterflow circuit and controlled by the control unit (15).

Thus, the user sets the desired hot water supply temperature at the first outlet port (2) and said value is entered into the control unit (15) as input data. Subsequently, the three-way valve (8) regulates the flow of hot water in the counterflow circuit in order to achieve the desired hot water temperature at the first outlet port (2). The temperature at the first outlet port (2) may be checked via a temperature sensor.

In addition, the control unit (15) may be controlled via remote control and the operation parameters may be interactive displayed via network (wired or wireless) in real time for the purpose of collecting, processing, storing and analyzing data.

The operation of the water heater system of the present invention is as follows: at first, the temperature of the heat transfer fluid (water) contained in the storage container (3) is set. The storage container (3) may be equipped with a temperature sensor in order to control the water temperature in said storage container.

In response to user demand, the control unit (15) activates the corresponding heat source, so as to supply energy in order to heat the heat transfer fluid (water) contained in the storage container up to the temperature set, and when said water temperature in the storage container is reached, the operation of the heat source stops, and thus, there is no more thermal energy supply to the storage container.

The operation of the heat source (turn-on, turn-off, water temperature control etc.) may be controlled by the control unit (15), if feasible, or by a central control system.

The storage container (3) of the present invention may use different heat sources of thermal energy supply, each heat source comprising a separate water circuits, such as the conventional boiler circuit with outlet port (10) and inlet port (9) at the storage container (3), the solar circuit with outlet port (14) and inlet port (12) at the storage container and heat pump circuit with outlet port (13) and inlet port (5) at the storage container (3). The priority and positions of the different heat sources are interchangeable and not important for the present invention.

The thermal energy supply in order to heat the water contained in the storage container (3) through the heat sources may be realized in three (3) different mode:
I. Via direct in fluid communication of the storage container with the heat source circuit through the available holes (inlet ports/outlet ports)
II. In fluid communication of the storage container with the heat source circuit via an external heat exchanger.
III. In fluid communication of the storage container with the heat source circuit via an internal coil/heat exchanger located inside the storage container.

When the control unit (15) activates the heat source, this causes relatively cooler water to be drawn from the storage container through the outlet port of the corresponding heat source circuit and said water is pumped into the heat source for heating. Subsequently, the hot water is returned (pumped back) to the storage container and is available for use.

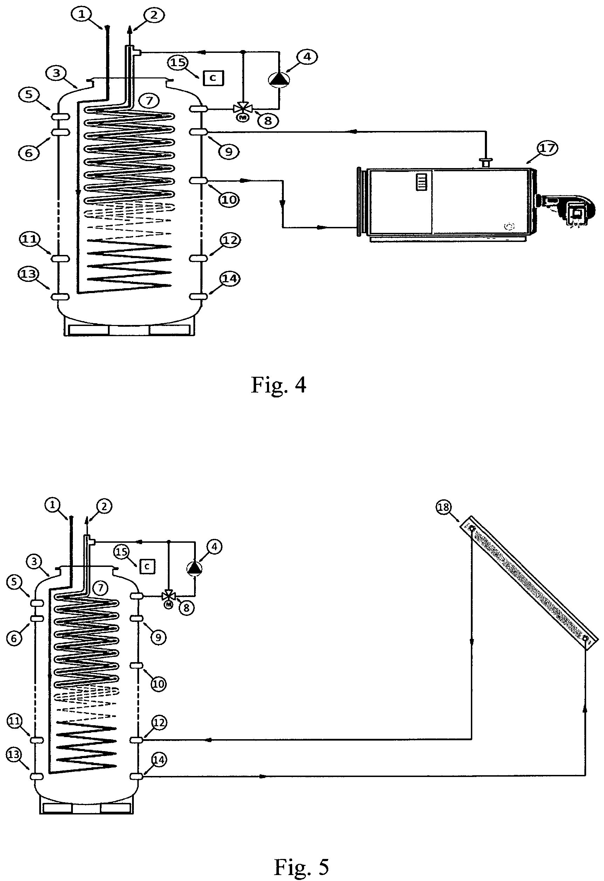

According to one embodiment of the present invention, the control unit (15) energizes the corresponding pump of the conventional boiler (17) circuit, and this causes relatively cooler water to be drawn from the storage container via the outlet port (10) of the conventional boiler circuit at the storage container and pump it into the conventional boiler (17) for heating. The hot water is then pumped from the conventional boiler and returned to the storage container (3) via the inlet port (9) of the conventional boiler circuit at the storage container (see Fig. 4).

According to another embodiment of the present invention, the water heater system can also include at least one solar collector (18) in fluid communication with the storage container (3) and a pump (not shown) in fluid communication with both the storage container (3) and the solar collector (18).

Therefore, when sufficient solar energy is available, the control unit (15) can also energize the corresponding pump of the solar circuit to drawn water from the storage container via the outlet port (14) of the solar collector (18) circuit at the storage container (3) and pump it into the solar collector (18) for additional heating. The hot water is then pumped from the solar collector and returned to the storage container via the inlet port (12) of the solar collector circuit at the storage container (see Fig. 5).

Still, according to another embodiment of the present invention, the water heater system can also include at least one heat pump (16) in fluid communication with the storage container (3) and a pump (not shown) in fluid communication with both the storage container (3) and the heat pump (16).

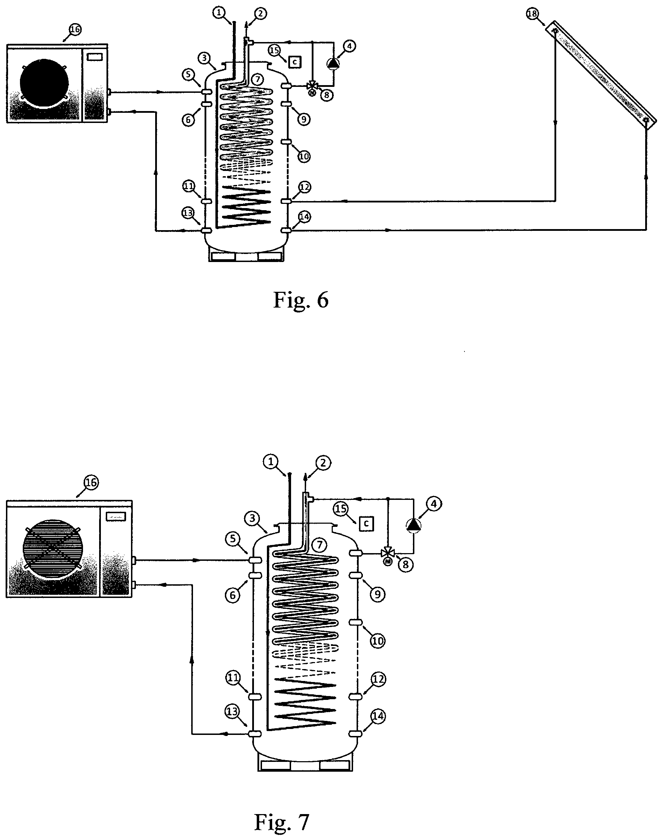

Thus, the control unit (15) can also energizes the corresponding pump of the heat pump (16) circuit to drawn water from the storage container (3) via the outlet port (13) of the heat pump circuit at the storage container and pump it into the heat pump (16) for heating. The hot water is then pumped from the heat pump (16) and returned to the storage container (3) via the inlet port (5) of the heat pump circuit at the storage container (see Fig. 7).

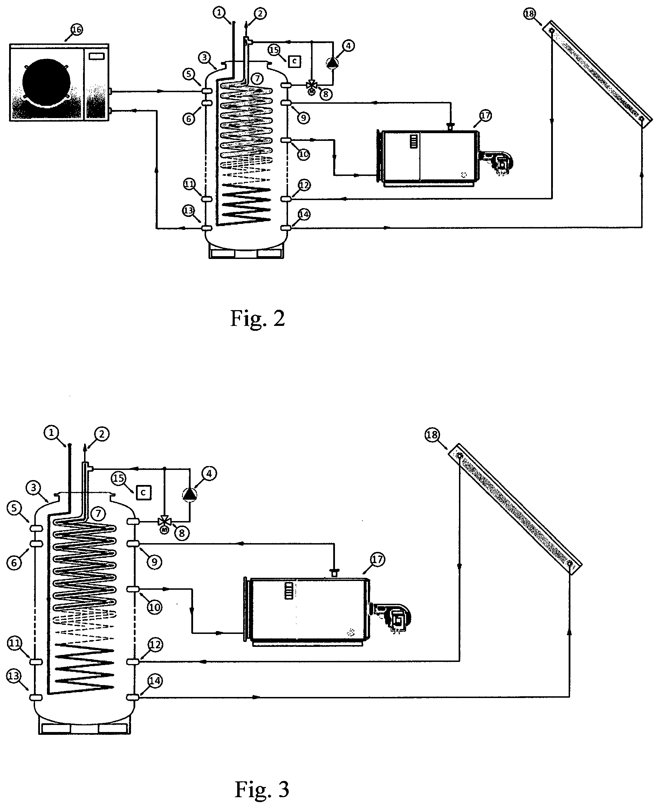

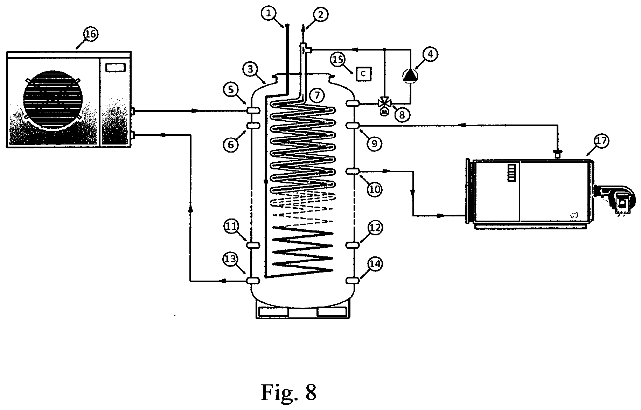

The conventional boiler circuit, the solar heating circuit, the heat pump circuit and/or any additional heat source circuit can be operated independently from each other and/or simultaneously (see Fig. 2, Fig. 3, Fig. 6 and Fig. 8).

When the storage container (3) is used for simultaneous supply of hot water and for other applications such as for space heating e.g. via a closed hydraulic circuit, the temperature of the water contained in the storage container should be sufficient enough for the intended use.

When hot water is drawn from the storage container (3) for space heating, the temperature of the water contained in said storage container (3) drops. If the temperature drop is equal or slightly below to the value set by the user in the control unit of the heat source, then the heat source is activated and continues to supply energy to the storage container (3) until the water temperature reaches the initial set value.

The water heater system of the present invention is also optimized to provide hot water supply for domestic use. When there is a demand for hot water supply, cold water mains supply (1) is delivered to the inner pipe of the heat exchanger (7) via the first inlet port (1). The cold water of the inner pipe is first heated by convective heat transfer from the hot water contained in the storage container (3).

Subsequently, hot water contained in the storage container is drawn by the variable speed circulator (4) of the counterflow circuit and said hot water is returned to the outer pipe at its upper part. Thus, the outer pipe of the heat exchanger circulates, in counterflow to the inner pipe, hot water that has been drawn from the storage container (3) and the water of the inner pipe of the heat exchanger is further heated by heat transfer from the hot water of the outer pipe of the heat exchanger.

The hot water is drawn off from the inner pipe at the first outlet port (2) at the desired temperature, which is achieved through the three-way proportional solenoid (8) comprised in the counterflow circuit and is controlled by the control unit (15) and/or by the use of variable speed circulator (4).

Accordingly, the desired temperature is entered in the control unit (15) by the user and then the three-way solenoid valve and/or the variable speed circulator (4) regulates the supply of hot water in the counterflow circuit in order to obtain the desired temperature for consumption at the first outlet port (2).

Due to the hot water consumption, the temperature of the water contained in the storage container (3) drops and this fact energizes the operation cycle of the heat source according to the program of the control unit.

The water heater system of the present invention comprises the following essential features: a hot water storage container combined with a heat exchanger, a variable speed circulator (inverter) to generate a counterflow in the outer pipe of the heat exchanger, a three-way proportional solenoid valve for adjusting the desired temperature for hot water domestic supply, and a control unit for controlling the operation of the system.

Said water heater system of the present invention provides a high-efficiency water heater system that produces hot water for domestic supply at the desired temperature with minimal deviation from the temperature of the water contained in the storage container by using a separate hot water circuit for domestic supply from the water contained in the storage container and thus, effectively addressing the hygiene problem and in particular the growth of bacteria, especially the bacterium legionella.

Moreover, the desired temperature is obtained rapidly and the hot water for domestic use does not have to stored but it is heated and consumed on demand (inline heating).

The water heater system of the present invention also increases the customer choice by allowing several different installation options and enables the use of non-enamelled water storage container tank which leads to reduction of manufacturing costs.

Further, the heat exchanger of the water heater system of the present invention has an increased efficiency.

## Claims

1. A water heater system for heating applications and domestic hot water supply comprising a storage container (3) filled with a heat transfer fluid such as water, wherein said storage container (3) comprises in its top portion a first inlet port (1) for mains water supply and a first outlet port for domestic hot water supply (2),
the system further comprising a pipe-in-pipe heat exchanger (7) disposed in the storage container (3) for transferring heat energy to the heat transfer fluid, said pipe-in-pipe heat exchanger (7) comprising an inner pipe defining a flow circuit and an outer pipe,
the system further comprising a counterflow circuit provided with a circulator (4) to generate a counterflow in the heat exchanger (7), said counter circuit being also provided with a three-way valve (8) for adjusting the desired temperature for hot water domestic supply, wherein the three-way valve (8) of the counterflow circuit is for regulating the flow of hot water in the counterflow circuit in order to achieve the desired hot water temperature at the first outlet port (2), wherein the circulator (4) is for drawing the hot heat transfer fluid contained in the storage container (3) in the counterflow circuit and returning said hot heat transfer fluid to the outer pipe of the heat excahnger (7) at its upper part, and
wherein the inner pipe of the heat exchanger (7) is connected to the first inlet port (1) from which cold water mains supply (1) is delivered to the inner pipe of the heat exchanger (7), wherein the inner pipe is first in the storage container (3) for heating the cold water of the inner pipe by convective heat transfer from the heat transfer fluid contained in the storage container (3), whereby said inner pipe then enters said outer pipe of the heat exchanger (7) and ends to the first outlet port for domestic hot water supply (2), wherein the first outlet port (2) is for delivering hot water from the inner pipe at the desired temperature,
wherein the outer pipe of the heat exchanger (7) is for circulating, in counterflow to the inner pipe, hot water that has been drawn from the storage container (3) so that the water of the inner pipe of the heat exchanger (7) can be further heated by heat transfer from the heat transfer fluid of the outer pipe of the heat exchanger (7), and
further said system comprises a control unit (15) for controlling the flow of the heat transfer fluid throughout the system and for controlling the operation of the water heater system, wherein the control unit (15) is configured to control the three-way valve (8) and/or the circulator (4) to regulate the supply of hot water in the counterflow circuit in order to obtain said desired temperature for consumption at the first outlet port (2), wherein the three-way valve (8) is configured to lead the heat transfer fluid from the storage container (3) to the circulator (4) or to lead the heat transfer fluid from the circulator (4) back to the circulator (4).

2. The water heater system according to claim 1, wherein said storage container (3) further comprises several axial holes for the position of temperature sensors and for flow communication of the water contained in the storage container (3) with additional heat source circuits such as a conventional boiler circuit (17), a heat pump circuit (16), a solar collector circuit (18) or any additional heat source circuit, in order to increase the thermal energy within the storage container (3).

3. The water heater system according to claim 1, wherein said heat exchanger (7) has a coiled configuration and comprises two co-axial pipes, an outer pipe and an inner pipe.

4. The water heater system according to claim 3, wherein said system further comprises a separate water circuit for domestic hot water supply connected to the cold water mains supply via the first inlet port (1) from which cold water is delivered to the inner pipe of the heat exchanger (7) and ends to the domestic hot water supply via the first outlet port (2) on the top portion of the storage container (3).

5. The water heater system according to claim 3, wherein the system is configured for circulating through the outer pipe of the heat exchanger (7), in counterflow to the flow of the inner pipe, the heat transfer fluid that has been drawn from the storage container (3) and returned to the outer pipe at its upper part by using the circulator (4), which is a variable speed circulator (4).

6. The water heater system according to claim 1, wherein said control unit (15) is responsible for adjusting and stabilizing the desired temperature of the domestic hot water supply at the first outlet port (2) by planning and controlling of the three-way valve (8), and/or the variable speed circulator (4) of the counterflow circuit.

7. The water heater system according to any preceding claim, wherein said circulator (4) is a variable speed circulator - inverter (4).

8. The water heater system according to claim 5, wherein the pipes for the inner pipe and the separate water circuit for domestic supply are made of stainless steel, steel or plastic.

9. The water heater system according to any preceding claim, wherein the storage container (3) is for use for simultaneous supply of hot water and for other applications such as for space heating.

10. The water heater system according to claim 5, wherein the variable speed circulator (4) of the counterflow circuit is suitable for drawing hot water contained in the storage container (3) and returning it to the outer pipe of the heat exchanger (7) at its upper part.

## Patentansprüche

1. Wassererhitzersystem für Heizanwendungen und Warmwasserversorgung, umfassend einen Speicherbehälter (3), der mit einem Wärmeübertragungsfluid wie Wasser gefüllt ist, wobei der Speicherbehälter (3) in seinem oberen Abschnitt eine erste Einlassöffnung (1) für die Hauptwasserversorgung und eine erste Auslassöffnung für die Warmwasserversorgung (2) umfasst,
wobei das System ferner einen Rohr-in-Rohr-Wärmetauscher (7) umfasst, der in dem Speicherbehälter (3) zum Übertragen von Wärmeenergie auf das Wärmeübertragungsfluid angeordnet ist, wobei der Rohrin-Rohr-Wärmetauscher (7) ein Innenrohr, das einen Strömungskreislauf definiert, und ein Außenrohr umfasst, wobei das System ferner einen Gegenstromkreislauf umfasst, der mit einer Umwälzpumpe (4) versehen ist, um einen Gegenstrom im Wärmetauscher (7) zu erzeugen, wobei der Gegenstromkreislauf auch mit einem Dreiwegeventil (8) zum Einstellen der gewünschten Temperatur für die Warmwasserversorgung versehen ist, wobei das Dreiwegeventil (8) des Gegenstromkreislaufs zum Regeln des Warmwasserflusses im Gegenstromkreislaufs dient, um die gewünschte Warmwassertemperatur an der ersten Auslassöffnung (2) zu erreichen, wobei die Umwälzpumpe (4) zum Fördern des im Speicherbehälter (3) enthaltenen heißen Wärmeübertragungsfluids in den Gegenstromkreislauf und Zurückführen des heißen Wärmeübertragungsfluids zum Außenrohr des Wärmetauschers (7) an dessen oberem Teil dient, und
wobei das Innenrohr des Wärmetauschers (7) mit der ersten Einlassöffnung (1) verbunden ist, aus der die Kaltwasserhauptversorgung (1) an das Innenrohr des Wärmetauschers (7) geliefert wird, wobei sich das Innenrohr zunächst im Speicherbehälter (3) zum Erhitzen des kalten Wassers des Innenrohrs durch konvektive Wärmeübertragung aus dem im Speicherbehälter (3) enthaltenen Wärmeübertragungsfluids befindet, wobei das Innenrohr dann in das Außenrohr des Wärmetauschers (7) eintritt und an der ersten Auslassöffnung für die Warmwasserversorgung (2) endet, wobei die erste Auslassöffnung (2) zum Ausgeben von Warmwasser mit der gewünschten Temperatur aus dem Innenrohr dient,
wobei das Außenrohr des Wärmetauschers (7) zum Umwälzen von aus dem Speicherbehälter (3) gefördertem Warmwasser im Gegenstrom zum Innenrohr dient, sodass das Wasser des Innenrohrs des Wärmetauschers (7) durch Wärmeübertragung aus dem Wärmeübertragungsfluid des Außenrohrs des Wärmetauschers (7) weiter erhitzt werden kann, und
wobei das System ferner eine Steuereinheit (15) zum Steuern des Durchflusses des Wärmeübertragungsfluids durch das System und zum Steuern des Betriebs des Wassererhitzersystems umfasst, wobei die Steuereinheit (15) dazu eingerichtet ist, das Dreiwegeventil (8) und/oder die Umwälzpumpe (4) zu steuern, um die Zufuhr von Warmwasser im Gegenstromkreislauf zu regeln, um die gewünschte Temperatur für den Verbrauch an der ersten Auslassöffnung (2) zu erhalten, wobei das Dreiwegeventil (8) dazu eingerichtet ist, das Wärmeübertragungsfluid aus dem Speicherbehälter (3) zur Umwälzpumpe (4) zu leiten oder das Wärmeübertragungsfluid aus der Umwälzpumpe (4) zurück zur Umwälzpumpe (4) zu leiten.

2. Wassererhitzersystem gemäß Anspruch 1, wobei der Speicherbehälter (3) ferner mehrere axiale Löcher für die Position von Temperatursensoren und zur Durchflussverbindung des im Speicherbehälter (3) enthaltenen Wassers mit zusätzlichen Wärmequellenkreisläufen, wie z. B. einem herkömmlichen Kesselkreislauf (17), einem Wärmepumpenkreislauf (16), einem Solarkollektorkreislauf (18) oder einem beliebigen zusätzlichen Wärmequellenkreislauf, aufweist, um die Wärmeenergie im Speicherbehälter (3) zu erhöhen.

3. Wassererhitzersystem gemäß Anspruch 1, wobei der Wärmetauscher (7) eine Schlangenkonfiguration aufweist und zwei koaxiale Rohre, ein Außenrohr und ein Innenrohr, umfasst.

4. Wassererhitzersystem gemäß Anspruch 3, wobei das System ferner einen separaten Wasserkreislauf für die Warmwasserversorgung umfasst, der über die erste Einlassöffnung (1), aus der kaltes Wasser an das Innenrohr des Wärmetauschers (7) abgegeben wird, mit der Kaltwasserhauptversorgung verbunden ist und über die erste Auslassöffnung (2) am oberen Teil des Speicherbehälters (3) zur Warmwasserversorgung führt.

5. Wassererhitzersystem gemäß Anspruch 3, wobei das System zum Umwälzen des Wärmeübertragungsfluids, das dem Speicherbehälter (3) entnommen und in das Außenrohr an seinem oberen Teil zurückgeführt wurde, durch das Außenrohr des Wärmetauschers (7) im Gegenstrom zum Durchfluss des Innenrohrs unter Verwendung der Umwälzpumpe (4), die eine drehzahlvariable Umwälzpumpe (4) ist, eingerichtet ist.

6. Wassererhitzersystem gemäß Anspruch 1, wobei die Steuereinheit (15) für das Einstellen und Stabilisieren der gewünschten Temperatur der Warmwasserversorgung an der ersten Auslassöffnung (2) durch Planen und Steuern des Dreiwegeventils (8) und/oder der drehzahlvariablen Umwälzpumpe (4) des Gegenstromkreislaufs verantwortlich ist.

7. Wassererhitzersystem gemäß einem der vorhergehenden Ansprüche, wobei die Umwälzpumpe (4) eine drehzahlvariable Umwälzpumpe (Inverter) (4) ist.

8. Wassererhitzersystem gemäß Anspruch 5, wobei die Rohre für das Innenrohr und den separaten Wasserkreislauf für die Wasserversorgung aus Edelstahl, Stahl oder Kunststoff bestehen.

9. Wassererhitzersystem gemäß einem der vorhergehenden Ansprüche, wobei der Speicherbehälter (3) für die gleichzeitige Bereitstellung von Warmwasser und für andere Anwendungen, wie z. B. für die Raumheizung, verwendbar ist.

10. Wassererhitzersystem gemäß Anspruch 5, wobei die drehzahlvariable Umwälzpumpe (4) des Gegenstromkreislaufs zum Ansaugen von im Speicherbehälter (3) enthaltenem Warmwasser und zu dessen Rückführung in das Außenrohr des Wärmetauschers (7) an dessen oberen Teil geeignet ist.

## Revendications

1. Système de chauffe-eau pour des applications de chauffage et l'alimentation en eau chaude domestique comprenant un récipient de stockage (3) rempli avec un fluide de transfert de chaleur tel que de l'eau, ledit récipient de stockage (3) comprenant dans sa partie supérieure un premier orifice d'entrée (1) pour l'alimentation en eau de ville et un premier orifice de sortie pour l'alimentation en eau chaude domestique (2),
le système comprenant en outre un échangeur de chaleur à tubes concentriques (7) disposé dans le récipient de stockage (3) pour transférer de l'énergie thermique au fluide de transfert de chaleur, ledit échangeur de chaleur à tubes concentriques (7) comprenant un tube interne définissant un circuit d'écoulement et un tube externe,
le système comprenant en outre un circuit à contre-courant pourvu d'un circulateur (4) pour générer un contre-courant dans l'échangeur de chaleur (7), ledit circuit à contre-courant étant également pourvu d'une vanne à trois voies (8) pour régler la température souhaitée pour l'alimentation en eau chaude domestique, la vanne à trois voies (8) du circuit à contre-courant servant à réguler l'écoulement d'eau chaude dans le circuit à contre-courant afin atteindre la température d'eau chaude souhaitée au niveau du premier orifice de sortie (2), le circulateur (4) servant à extraire le fluide de transfert de chaleur chaud contenu dans le récipient de stockage (3) dans le circuit à contre-courant et faire retourner ledit fluide de transfert de chaleur chaud au tube externe de l'échangeur de chaleur (7) dans sa partie supérieure, et
dans lequel le tube interne de l'échangeur de chaleur (7) est raccordé au premier orifice d'entrée (1) depuis lequel l'alimentation en eau de ville froide (1) est distribuée au tube interne de l'échangeur de chaleur (7), le tube interne étant le premier dans le récipient de stockage (3) à chauffer l'eau froide du tube interne par transfert de chaleur convectif depuis le fluide de transfert de chaleur contenu dans le récipient de stockage (3), ledit tube interne entrant ensuite dans ledit tube externe de l'échangeur de chaleur (7) et se terminant au niveau du premier orifice de sortie pour l'alimentation en eau chaude domestique (2), le premier orifice de sortie (2) servant à distribuer de l'eau chaude depuis le tube interne à la température souhaitée,
dans lequel le tube externe de l'échangeur de chaleur (7) sert à faire circuler, à contre-courant du tube interne, de l'eau chaude qui a été extraite du récipient de stockage (3) de telle sorte que l'eau du tube interne de l'échangeur de chaleur (7) peut être encore chauffée par transfert de chaleur depuis le fluide de transfert de chaleur du tube externe de l'échangeur de chaleur (7), et
ledit système comprenant en outre une unité de contrôle (15) pour contrôler l'écoulement du fluide de transfert de chaleur à travers le système et pour contrôler le fonctionnement du système de chauffe-eau, l'unité de contrôle (15) étant configurée pour contrôler la vanne à trois voies (8) et/ou le circulateur (4) pour réguler l'alimentation en eau chaude dans le circuit à contre-courant afin d'obtenir ladite température souhaitée pour la consommation au niveau du premier orifice de sortie (2), la vanne à trois voies (8) étant configurée pour conduire le fluide de transfert de chaleur du récipient de stockage (3) au circulateur (4) ou pour conduire le fluide de transfert de chaleur du circulateur (4) de nouveau au circulateur (4).

2. Système de chauffe-eau selon la revendication 1, dans lequel ledit récipient de stockage (3) comprend en outre plusieurs trous axiaux pour la position de capteurs de température et pour la communication fluidique de l'eau contenue dans le récipient de stockage (3) avec des circuits de source de chaleur supplémentaires tels qu'un circuit de chaudière conventionnelle (17), un circuit de pompe à chaleur (16), un circuit de collecteur solaire (18) ou n'importe quel circuit de source de chaleur supplémentaire, afin d'augmenter l'énergie thermique à l'intérieur du récipient de stockage (3).

3. Système de chauffe-eau selon la revendication 1, dans lequel ledit échangeur de chaleur (7) a une configuration en serpentin et comprend deux tubes coaxiaux, un tube externe et un tube interne.

4. Système de chauffe-eau selon la revendication 3, ledit système comprenant en outre un circuit d'eau séparé pour l'alimentation en eau chaude domestique raccordé à l'alimentation en eau de ville froide par le biais du premier orifice d'entrée (1) depuis lequel de l'eau froide est distribuée au tube interne de l'échangeur de chaleur (7) et aboutit à l'alimentation en eau chaude domestique par le biais du premier orifice de sortie (2) sur la partie supérieure du récipient de stockage (3).

5. Système de chauffe-eau selon la revendication 3, le système étant configuré pour faire circuler à travers le tube externe de l'échangeur de chaleur (7), à contre-courant de l'écoulement du tube interne, le fluide de transfert de chaleur qui a été extrait du récipient de stockage (3) et retourné au tube externe dans sa partie supérieure au moyen du circulateur (4), qui est un circulateur à vitesse variable (4).

6. Système de chauffe-eau selon la revendication 1, dans lequel ladite unité de contrôle (15) est responsable du réglage et de la stabilisation de la température souhaitée de l'alimentation en eau chaude domestique au niveau du premier orifice de sortie (2) par planification et contrôle de la vanne à trois voies (8) et/ou du circulateur à vitesse variable (4) du circuit à contre-courant.

7. Système de chauffe-eau selon une quelconque revendication précédente, dans lequel ledit circulateur (4) est un circulateur-inverseur à vitesse variable (4).

8. Système de chauffe-eau selon la revendication 5, dans lequel les tubes pour le tube interne et le circuit d'eau séparé pour l'alimentation domestique sont constitués d'acier inoxydable, d'acier ou de plastique.

9. Système de chauffe-eau selon une quelconque revendication précédente, dans lequel le récipient de stockage (3) est destiné à être utilisé pour l'alimentation simultanée en eau chaude et pour d'autres applications telles que le chauffage des locaux.

10. Système de chauffe-eau selon la revendication 5, dans lequel le circulateur à vitesse variable (4) du circuit à contre-courant est approprié pour extraire de l'eau chaude contenue dans le récipient de stockage (3) et la faire retourner au tube externe de l'échangeur de chaleur (7) dans sa partie supérieure.
